# EUROPÄISCHE PATENTSCHRIFT

(11) **EP 2 008 251 B1**
(45) Veröffentlichungstag und Bekanntmachung des Hinweises auf die Patenterteilung: **18.09.2013**
(21) Anmeldenummer: 07723505.9
(22) Anmeldetag: 22.03.2007
(51) Int. Cl.: G07D 7/12, G02F 1/133, G02F 1/13, G01K 11/16, C09K 19/02, D21H 21/48, B42D 15/00, B42D 15/10

(54) **SICHERHEITSELEMENT**
SECURITY ELEMENT
ÉLÉMENT DE SÉCURITÉ

(30) Priorität: 04.04.2006 DE 102006016048
(43) Veröffentlichungstag der Anmeldung: 31.12.2008
(73) Patentinhaber: Giesecke & Devrient GmbH, 81677 München (DE)
(72) Erfinder: MENGEL, Christioph, 83607 Holzkirchen (DE); PLASCHKA, Reinhard, 86938 Schondorf (DE); SCHIFFMANN, Peter, 85354 Freising (DE); WÖRLEIN, Edith, 81539 München (DE)
(86) Internationale Anmeldenummer: PCT/EP2007/002551
(87) Internationale Veröffentlichungsnummer: WO 2007/115663

(56) Entgegenhaltungen:
- WO-A-03/096285
- WO-A-2004/028824
- DE-A1- 10 343 547
- DE-A1- 19 941 295
- DE-A1-102004 038 542
- US-A1- 2003 052 305

## Beschreibung

Die Erfindung betrifft ein Sicherheitselement zur Absicherung von Wertgegenständen, das mindestens ein flüssigkristallines thermochromes Material umfasst. Ferner betrifft die Erfindung einen Wertgegenstand, ein Transfermaterial und Verfahren zur Herstellung derartiger Sicherheitselemente und Wertgegenstände.

Es ist bereits seit langem bekannt, thermochrome Materialien zur Absicherung von Wertdokumenten zu verwenden. So beschreibt beispielsweise die DE 2212 350 einen Sicherheitsfaden aus transparentem Kunststoff, der Hohlräume aufweist. In diesen Hohlräumen befindet sich ein flüssigkristallines Material, das bei Erhöhung oder Erniedrigung der Temperatur einen reversiblen Farbumschlag zeigt.

Aus der EP 0 608 078 B1 ist ebenfalls ein Sicherheitsfaden mit thermochromen Eigenschaften bekannt. In diesem Fall wird ein Kunststoffmaterial mit einem Aufdruck oder mit Zeichen versehen, die durch teilweises Demetallisieren einer Metallschicht entstanden sind. Über diesem Aufdruck bzw. diesen Negativzeichen ist ein bei Normaltemperatur farbiger thermochromer Überzug angeordnet. Bei Erwärmung wird der thermochrome Überzug farblos, so dass die darunterliegenden Zeichen erkennbar werden. Alternativ kann auch ein thermochromer Überzug verwendet werden, der bei Normaltemperatur farblos ist und bei Erwärmung farbig wird, so dass die Zeichen verschwinden. Dieser Faden wird so in das Sicherheitspapier eingebracht, dass er in bestimmten Bereichen, sogenannten "Fenstern", direkt an die Oberfläche tritt.

Derartige thermochrome Sicherheitsfäden haben jedoch den Nachteil, dass der thermochrome Effekt allein bereits auch in vielen nicht sicherheitstechnischen Bereichen zu rein dekorativen Zwecken eingesetzt wird, weshalb der durch den Farbumschlag des thermochromen Materials hervorgerufene optische Effekt vom Betrachter nicht mehr als Sicherheitsmerkmal, sondern lediglich als Designvariante erkannt wird. Derartige Sicherheitselemente bieten daher keinen hohen Fälschungsschutz. Die Kombination des thermochromen Effektes mit weiteren Informationen bzw. eine Individualisierung der thermochromen Schichten ist zudem nicht oder nur durch aufwendiges Verdrucken mehrerer Schichten möglich.

Weiteren Stand der Technik bildet das Dokument WO2004/028824, welches ein Sicherheitselement zur Absicherung von Wertgegenständen offenbart, wobei das Sicherheitselement eine Mischung aufweist, die mindestens ein flüssigkristallines thermochromes Material und mindestens ein Material mit optisch variablem Effekt umfasst.

Der Erfindung liegt daher die Aufgabe zugrunde, einen Wertgegenstand, ein Transferelement und ein Sicherheitselement zu schaffen, die einen hohen Fälschungsschutz bieten und die Nachteile des Standes der Technik vermeiden.

Weiterhin ist es Aufgabe der Erfindung, Verfahren zur Herstellung eines derartigen Sicherheitselements und Wertgegenstandes bereitzustellen.

Diese Aufgaben werden durch die Merkmale der unabhängigen Ansprüche gelöst. Weiterbildungen sind Gegenstand der Unteransprüche.

Bei einem Wertgegenstand im Sinne der Erfindung kann es sich um jeden zu schützen beabsichtigten Gegenstand, wie beispielsweise Markenartikel, Sicherheitspapier oder Wertdokumente, handeln. Wertgegenstände im Sinne der vorliegenden Erfindung sind insbesondere Banknoten, aber auch Aktien, Urkunden, Briefmarken, Schecks, Scheckkarten, Kreditkarten, Ausweise, Pässe, Eintrittskarten, Fahrkarten, Flugscheine und Ähnliches sowie Etiketten, Siegel, Verpackungen oder andere Elemente für die Produktsicherung.

Die vereinfachende Benennung "Wertgegenstand" oder "Sicherheitselement" schließt deshalb im Folgenden stets Dokumente der genannten Art ein.

Die Erfindung stellt ein Sicherheitselement wie in Anspruch 1 definiert bereit.

Weiterhin stellt die Erfindung alternativ ein Sicherheitselement wie in Anspruch 2 definiert bereit.

Das flüssigkristalline thermochrome Material ändert seine Eigenfarbe reversibel unter Temperatureinfluss bei einer bestimmten Umschlagstemperatur. Bevorzugt zeigt das thermochrome Material zusätzlich Polarisationseffekte, d.h., dass es in der Lage ist, Licht selektiv zu polarisieren. Die Polarisation kann linear oder circular erfolgen. Bei diesen Stoffen handelt es sich vorzugsweise um verkapselte Flüssigkristalle, die bei einer bestimmten Temperatur kristallin sind und nicht polarisieren, aber bei Temperaturänderung, insbesondere Temperaturerhöhung, und Wechsel in den flüssigkristallinen Zustand ihre Farbe verändern und zusätzlich polarisieren. Je nach verwendetem thermochromen Material kann bei weiterer Temperaturerhöhung das Material vom flüssigkristallinen Zustand in den flüssigen Zustand übergehen, wobei das thermochrome Material im flüssigen Zustand wieder transparent oder zumindest transluzent ist und nicht polarisiert. Geeignete Verbindungen sind beispielsweise Cyanobiphenyle, dotiert mit chiralem Agens oder Cholesterylester.

Für das thermochrome Material werden bevorzugt Stoffe verwendet, die unterhalb einer vorbestimmten Temperatur zumindest durchscheinend, vorzugsweise transparent, und oberhalb dieser Temperatur farbig sind. Bei bestimmten Anwendungen kann es sinnvoll sein, thermochrome Stoffe zu verwenden, die unterhalb einer vorbestimmten Temperatur farbig und oberhalb dieser Temperatur durchscheinend oder transparent sind. Die Umschlagstemperatur der thermochromen Stoffe liegt vorzugsweise oberhalb der Umgebungstemperatur, z.B. im Bereich von 25 °C bis 60 °C, vorzugsweise 30 °C bis 60 °C. Je nach Anwendung sind aber auch Umschlagstemperaturen von unter 25 °C denkbar.

Das flüssigkristalline thermochrome Material des Sicherheitselements ist bereichsweise so verändert, dass es in dem besagten Bereich keine thermochromen Eigenschaften oder eine veränderte Umschlagstemperatur aufweist. Im veränderten Bereich kann der Betrachter somit keinen Farbumschlag bei Temperaturänderung beobachten oder aber einen Farbumschlag bei einer nunmehr verschobenen Umschlagstemperatur. Auf diese Weise ist es leicht möglich, die thermochromen Bereiche mit einer Information bzw. Individualisierung zu versehen, die keinen Farbumschlag oder einen veränderten Farbumschlag zeigt. Die veränderten Bereiche werden vorzugsweise in Form von Zeichen und/oder Mustern ausgestaltet.

Die Veränderung bzw. Zerstörung der thermochromen Eigenschaften des flüssigkristallinen Materials erreicht man durch Bestrahlung mit UV-Licht, durch Einwirkung von Lösungsmitteln oder durch Druckeinwirkung.

Eine bereichsweise Veränderung kann mittels Einsatz eines UV-Lasers erfolgen, der präzise nur auf die Bereiche, die ein verändertes thermochromes Verhalten zeigen sollen, gelenkt wird.

Alternativ kann bei Einsatz einer großflächigen Strahlungsquelle mittels Maskentechnik eine bereichsweise Belichtung erzielt werden. Hierzu wird die zu bestrahlende Fläche mit einer Maske abgedeckt und diese Großfläche, z.B. mit einem Hg-Mitteldruckstrahl, belichtet. Die Maske kann auch in das Sicherheitselement integriert werden, indem man eine für das Auge im Wesentlichen nicht sichtbare UV-Schutzschicht auf das flüssigkristalline thermochrome Material an den Stellen aufbringt, die weiterhin einen thermochromen Effekt zeigen sollen. Die Schutzschicht wird vorzugsweise aufgedruckt, z.B. im Offset, Flexo- oder Siebdruck. Im Anschluss wird vollflächig mit UV-Licht bestrahlt.

Eine weitere Möglichkeit, eine bereichsweise Veränderung zu erzielen, besteht darin, ein geeignetes Lösungsmittel bereichsweise auf das flüssigkristalline thermochrome Material aufzubringen. Insbesondere kann mittels Inkjetdruck das Lösungsmittel bereichsweise aufgedruckt werden. Bei Kontakt des Lösungsmittels mit dem thermochromen Material wird dieses chemisch verändert, so dass die thermochromen Eigenschaften verloren gehen. Als Lösungsmittel eignen sich bevorzugt organische Lösungsmittel, wie beispielsweise Aceton, Essigester, Ethanol, Methylethylketon.

In einer weiteren Variante kann die bereichsweise Veränderung durch Druckeinwirkung erfolgen. Vorzugsweise wird hierzu das flüssigkristalline thermochrome Material bereichsweise verprägt. Vermutlich wird hierdurch die Verkapselung der Flüssigkristalle zerstört.

Das Material mit optisch variablem Effekt vermittelt bei unterschiedlichen Betrachtungswinkeln unterschiedliche Farbeindrücke. Man spricht auch vom sogenannten "Farbkippeffekt". Als besonders geeignet haben sich Grün-Blau- oder Kupfer-Grün-Farbübergänge erwiesen. Vorzugsweise handelt es sich hierbei um flüssigkristalline Materialien. Besonders bevorzugt zeigt auch dieses Material lichtpolarisierende Eigenschaften. Insbesondere zeigen vernetzte flüssigkristalline Materialien lichtpolarisierende Eigenschaften bei gleichzeitigem Vorliegen eines Farbkippeffektes, ohne thermochrome Effekte aufzuweisen. Geeignete Verbindungen sind beispielsweise in der DE 197 26 050 A1 und der EP 0 686 674 A1 beschrieben.

Alternativ zum flüssigkristallinen Material mit optisch variablem Effekt können auch Dünnschichtpigmente mit Interferenzeffekten, wie das sogenannte IRIODIN® eingesetzt werden. Bei IRIODIN® handelt es sich um mit Metalloxid beschichtete Glimmerpartikel.

Das flüssigkristalline thermochrome Material sowie das Material mit optisch variablem Effekt sind üblicherweise lichtdurchlässig, insbesondere lichtdurchlässige Pigmente, und weisen keine oder nur eine geringe eigene Körperfarbe auf, so dass der visuell erkennbare optische Eindruck dieser Pigmente sehr stark vom Untergrund geprägt wird. Auf einem diffus reflektierenden weißen oder hellen Untergrund treten die Pigmente kaum in Erscheinung, da das diffus reflektierte Streulicht den optisch variablen Effekt überlagert. Auf einem dunklen Untergrund dagegen kommt das Farbspiel dieser Pigmente besonders gut zu Geltung, da dieser die transmittierte Strahlung absorbiert. Vorzugsweise wird das flüssigkristalline thermochrome Material bzw. die Mischung über einen dunklen, vorzugsweise schwarzen Untergrund angeordnet. Der Untergrund kann dabei vollflächig oder in Form von Mustern und/oder Zeichen vorliegen. Für den Untergrund wird vorteilhafterweise eine wärmeleitfähige Farbe, wie z.B. Ruß oder eine Silberschicht, eingesetzt. Selbstverständlich kann der Untergrund selbst auch mehrschichtig aufgebaut sein. Insbesondere eignet sich ein Untergrund, der aus einer thermochromen Schicht über einer nicht thermochromen Schicht aufgebaut ist. Die thermochrome Schicht ist vorzugsweise im Stichtiefdruck erzeugt und umfasst einen Leucofarbstoff. Besonders bevorzugt umfasst die im Stichtiefdruckverfahren verdruckte thermochrome Schicht eine mikroverkapselte Dreikomponenten-Mischung aus einem Leucofarbstoff, einem Lösungsmittel und einer schwachen Säure.

In einer besonders bevorzugten Variante polarisiert das thermochrome flüssigkristalline Material und das flüssigkristalline Material mit optisch variablem Effekt Licht jeweils unterschiedlich, z.B. kann ein Material selektiv circular rechts polarisieren und das andere Material selektiv circular links polarisieren.

Die erfindungsgemäße Mischung, umfassend mindestens ein flüssigkristallines thermochromes Material und mindestens ein Material mit optisch variablem Effekt, kann durch einfache Vermengung der unterschiedlichen Komponenten erfolgen.

Vorzugsweise liegen das flüssigkristalline thermochrome Material und das Material mit optisch variablen Effekt in der Mischung, bezogen auf den Festkörpergehalt, im Verhältnis 1:1 vor.

Vorzugsweise wird das flüssigkristalline thermochrome Material bzw. die erfindungsgemäße Mischung verdruckt und hierzu in Form von Druckfarben verarbeitet, indem sie beispielsweise einem transparentem Bindemittel beigemischt wird. Die Druckfarbe kann selbstverständlich weitere Farbpigmente enthalten. Die Materialien lassen sich mit jedem geeigneten Druckverfahren verarbeiten, insbesondere mittels Siebdruck, jedoch auch im Stichtiefdruck, Rastertief-, Flexo- und Buchdruck.

Neben Druckfarben können die Materialien aber auch einer transparenten Kunststoffschicht beigemischt werden.

Für das erfindungsgemäße flüssigkristalline thermochrome Material bzw. die Mischung bieten sich im Rahmen der Erfindung zahlreiche Variationsmöglichkeiten. So kann das Material bzw. die Mischung vollflächig oder auch nur bereichsweise, insbesondere in Form von Zeichen oder Mustern, vorgesehen sein.

Das flüssigkristalline thermochrome Material bzw. die Mischung können entweder direkt auf dem Wertgegenstand erzeugt oder auf einem separaten Träger vorbereitet werden. Der Wertgegenstand bzw. separate Träger als Substrat, auf dem sich das Sicherheitselement befindet, ist dabei im Bezug auf das verwendete Material in keiner Weise eingeschränkt. Bevorzugt handelt es sich aber um Papier oder Kunststoff, auch in Form von Folien. Bei einem separaten Träger kann das Sicherheitselement beispielsweise als selbsttragendes Etikett, bevorzugt auf einem Kunststoffsubstrat, ausgebildet sein. Insbesondere ist das Sicherheitselement in Form eines Sicherheitsfadens, besonders bevorzugt als Fensterfaden, ausgebildet. Da es in einigen Fällen Schwierigkeiten bereiten kann, den Wertgegenstand direkt mit der jeweiligen Schichtfolge zu versehen, kann es alternativ sinnvoll sein, den Schichtaufbau des Sicherheitselements zumindest teilweise auf einem Transfermaterial vorzubereiten.

Sofern die gesamte Schichtfolge des Sicherheitselements auf einem Transfermaterial vorbereitet wird, ist darauf zu achten, dass der in den jeweiligen Figuren gezeigte Schichtaufbau in der umgekehrten Reihenfolge auf dem Trägerband des Transfermaterials vorbereitet werden muss. Der Schichtaufbau des Sicherheitselements kann dabei in Endlosform auf dem Trägerband vorbereitet werden. Das Aufbringen des Sicherheitselements auf einen zu sichernden Wertgegenstand erfolgt dabei mithilfe einer Klebstoffschicht, die entweder auf den Wertgegenstand oder aber auf die oberste Schicht des Transfermaterials aufgebracht wird. Vorzugsweise wird hierfür ein Heißschmelzkleber verwendet. Um die Umrissform des Sicherheitselements festzulegen, kann entweder nur in den zu übertragenden Bereichen eine Klebstoffschicht vorgesehen werden oder der Klebstoff, wie beispielsweise ein Heißschmelzkleber, wird nur in den zu übertragenden Bereichen aktiviert. Dies geschieht meist unter Wärme- und Druckeinwirkung. Nach dem Übertrag wird das Trägerband des Transfermaterials abgezogen und lediglich der gezeigte Schichtaufbau des Sicherheitselements verbleibt auf dem zu sichernden Wertgegenstand.

Bei dem Wertgegenstand, auf welchen das Sicherheitselement aufgebracht wird, kann es sich beispielsweise um ein Sicherheitspapier, ein Sicherheitsdokument, insbesondere eine Banknote, aber auch um Produktverpackungen handeln. Auch andere Wertgegenstände, die eine sicherheitstechnische Absicherung benötigen, können selbstverständlich mit dem erfindungsgemäßen Sicherheitselement versehen werden.

Vorzugsweise ist das Sicherheitselement vollständig auf der Oberfläche des zu sichernden Gegenstandes angeordnet. Wenn das Sicherheitselement vollständig auf der Oberfläche des Gegenstandes angeordnet ist, kann es wesentlich großflächiger ausgeführt werden, so dass der thermisch bedingte Farbumschlag des flüssigkristallinen thermochromen Materials und die bereichsweise vorliegende Information aufgrund der größeren Fläche wesentlich augenfälliger ist. Auch die Anwendung eines Polarisationsfilters gestaltet sich wesentlich einfacher, wenn eine größere Beobachtungsfläche zur Verfügung steht.

Durch den zusätzlichen Einsatz des Materials mit optisch variablem Effekt, vorzugsweise unterschiedlich polarisierender flüssigkristalliner Materialien, wird das Sicherheitselement zusätzlich fälschungssicherer gestaltet. Denn derartige Materialien sind entweder aufwendig in der Herstellung oder können nicht ohne weiteres im Handel bezogen werden. Die erfindungsgemäße Mischung weist zudem den Vorteil auf, dass die Überlappung der thermochromen und optische variablen Effekte vom Betrachter leichter auf dem zu sichernden Gegenstand auszumachen sind und er diese gleichzeitig überprüfen kann. Insbesondere beim Einsatz von Polarisationsfiltern können durch Auflegen des Filters auf eine bestimmte Stelle des Gegenstandes die Effekte mit einem "Griff" sichtbar gemacht werden.

Die vorliegende Erfindung bietet somit zusätzliche Fälschungssicherheit durch Kombination des ohne Hilfsmittel visuell wahrnehmbaren individualisierten thermochromen Effektes. Insbesondere wird die Fälschungssicherheit weiter erhöht durch zusätzliche Verwendung des ohne Hilfsmittel visuell wahrnehmbaren optisch variablen Effektes und des nur mit Hilfsmitteln visuell wahrnehmbaren Polarisationseffektes. Neben dem leicht erkennbaren optisch variablen Effekt kann zusätzlich eine Information mittels des thermochromen Effektes einfach versteckt bzw. sichtbar gemacht werden, z.B. lediglich durch Berührung kann der Betrachter die Information freilegen. Die Echtheit der Information kann in einem nächsten Schritt, z.B. mittels eines Polarisationsfilters, weiter überprüft werden, wenn mindestens eines der flüssigkristallinen Materialien Licht polarisiert. Als besonderer Vorteil hat sich erwiesen, dass die erhöhte Fälschungssicherheit aufgrund des individualisierten thermochromen Effekts in einfacher Weise und damit zeit- und kostensparend erreicht wird.

Weitere Vorteile und Ausführungsformen der Erfindung werden anhand der Figuren näher erläutert. Die in den Figuren gezeigten Proportionen entsprechen nicht unbedingt den in der Realität vorliegenden Verhältnissen und dienen vornehmlich zur Verbesserung der Anschaulichkeit.

Es zeigen:
- Fig.1: ein Sicherheitsdokument mit einem erfindungsgemäßen Sicherheitselement,
- Fig. 2, 4: verschiedene Ausführungsformen des Sicherheitsdokuments im Querschnitt,
- Fig. 3a, 3b: Ausführungsform gemäß Fig. 2 in Aufsicht,
- Fig. 5a,5b,5c: Ausführungsform gemäß Fig. 4 in Aufsicht.

Die Erfindung wird aus Gründen der Übersichtlichkeit am Beispiel einer Banknote näher erläutert.

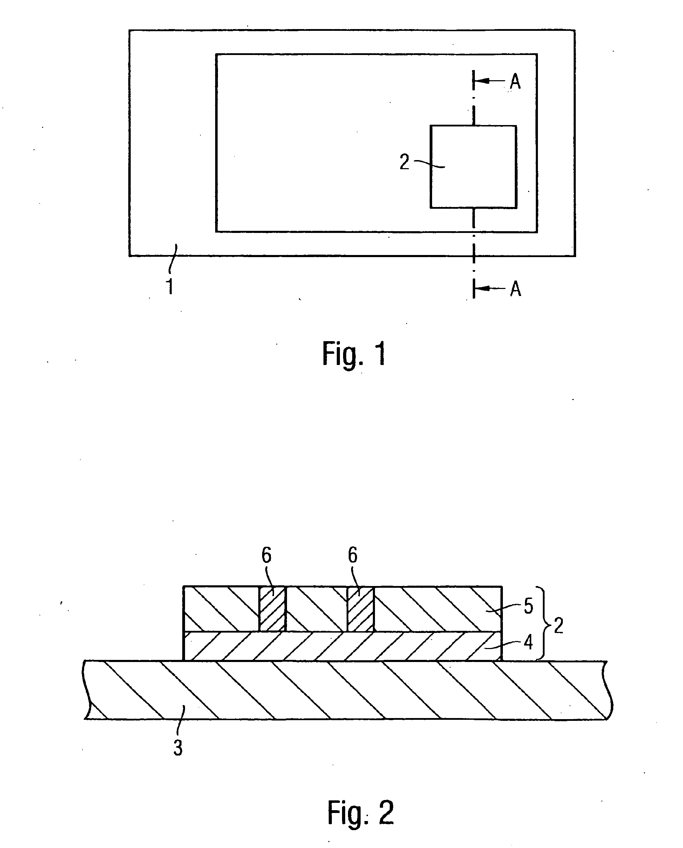

Fig. 1 zeigt eine derartige Banknote 1 aus Papier oder Kunststoff, die mit einem auf der Vorderseite der Banknote aufgedrucktem Sicherheitselement 2 in Form eines Quadrates versehen ist. Die Banknote 1 kann selbstverständlich weitere Sicherheitsmerkmale, wie Wasserzeichen, Stahltiefdruck, Sicherheitsfaden oder lumineszierende oder magnetische Aufdrucke oder Ähnliches, aufweisen.

Das Sicherheitselement 2 weist eine thermochrome flüssigkristalline Schicht auf, die bereichsweise verändert ist und vorzugsweise mit flüssigkristallinen Farbkippeffektpigmenten gemischt ist. Das Sicherheitselement 2 ist vollständig auf der Oberfläche der Banknote 1 angeordnet, so dass der thermisch bedingte Farbumschlag und die in Mustern und/oder Zeichen eingebrachte Individualisierung der thermochromen Schicht aufgrund der bereichsweisen Veränderungen sehr gut erkennbar sind.

Neben der flüssigkristallinen thermochromen Schicht und der Farbkippeffektschicht kann das Sicherheitselement 2 auch weitere Schichten aufweisen, die allein oder in Kombination mit anderen Schichten des Sicherheitselements weitere auffällige optische oder maschinenlesbare Effekte erzeugen.

Einige bevorzugte Ausführungsformen werden anhand der Fig. 2 bis 5 näher erläutert, welche die Banknote 1 in Aufsicht bzw. im Querschnitt entlang der strichpunktierten Linie A - A zeigen, um den Schichtaufbau des Sicherheitselements 2 zu verdeutlichen.

Gemäß Fig. 2 wird das Papier- oder Kunststoffsubstrat 3 der Banknote 1 mit einem schwarzen Offsetaufdruck 4 versehen. Der Offsetdruck kann vollflächig oder in Form von Zeichen oder Mustern erfolgen und weist eine Schichtdicke im Bereich von ca. 0,8 bis 1,5 µm auf. Über dem Offsetaufdruck ist vollflächig eine flüssigkristalline thermochrome Schicht 5 angeordnet, die mit Bereichen 6 versehen ist, in denen das flüssigkristalline thermochrome Material bereichsweise so verändert ist, dass es in diesem Bereich keine thermochromen Eigenschaften zeigt und transparent oder zumindest transluzent ist. Die Schichtdicke der thermochromen Schicht 5 liegt im Bereich von ca. 8 bis 20 µm. Die Bereiche 6 umgebenden Flächen bestehen aus unverändertem thermochromem Material. Das flüssigkristalline thermochrome Material zeigt bei ca. 27 °C (Umschlagstemperatur T1) einen Farbumschlag von transparent nach farbig. Bei weiterer Temperaturerhöhung auf ca. 60 °C (Umschlagstemperatur T2) wird die thermochrome Schicht wieder transparent oder zumindest transluzent.

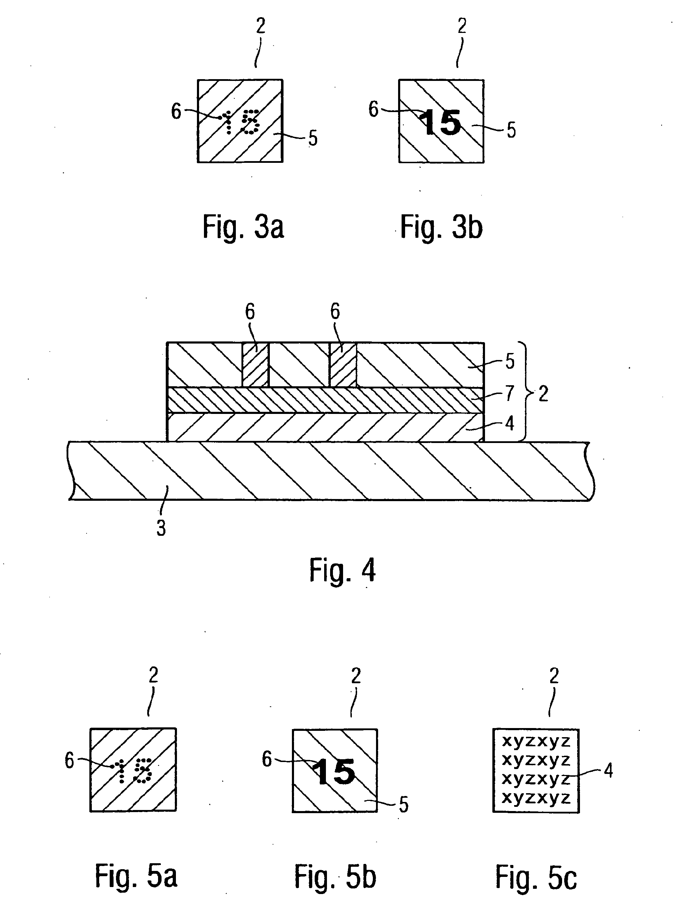

Fig. 3a und Fig. 3b zeigen das Sicherheitselement 2 der Fig. 2 in Aufsicht bei unterschiedlichen Umgebungstemperaturen.

Fig. 3a zeigt das Sicherheitselement 2 in Aufsicht, wobei die Umgebungstemperatur unterhalb der Umschlagstemperatur (T1) des thermochromen Materials liegt. Das thermochrome Material 5 ist transparent. Auch die veränderten Bereiche 6 erscheinen transparent und können vom Betrachter nicht von den unveränderten Bereichen 5 unterschieden werden. Die veränderten Bereiche 6, die die Zahl "15" darstellen, sind zum besseren Verständnis gepunktet dargestellt, aber nicht erkennbar. Dem Betrachter erscheint das Element aufgrund des vollflächig schwarzen Untergrunddruckes als einheitlich schwarze Fläche.

Gemäß der Erfindung kann der dunkle, vorzugsweise schwarze Untergrund vollflächig oder strukturiert ausgestattet sein. So kann der Untergrund z.B. in Form von Mustern und/oder Zeichen, wie Guillochen, Negativ-Guillochen oder anderen fein strukturierten Mustern, gestaltet sein. Ebenso gut kann mittels alphanumerischer Zeichen oder Balkencodes eine Information in das Sicherheitselement eingearbeitet sein. Bevorzugt ist der Untergrund so ausgestaltet, dass der überwiegende Anteil der infrage kommenden Fläche dunkel bzw. schwarz ist.

Fig. 3b zeigt das Sicherheitselement 2 in Aufsicht bei einer Umgebungstemperatur, die oberhalb der Umschlagstemperatur (T1), aber unterhalb der Umschlagstemperatur (T2) liegt. Durch Zuführen von Körperwärme beim Berühren oder auch Reiben der Oberfläche kann die Umschlagstemperatur leicht erreicht werden. Die unveränderten Bereiche 5 werden farbig, während die veränderten Bereiche 6 keinen thermochromen Effekt mehr aufweisen und transparent bleiben. Dem Betrachter erscheinen dann die Bereiche 6 aufgrund des schwarzen Untergrundes als schwarze Bereiche, in diesem Fall als die Zahl "15", während in den Bereichen 5 die Farbigkeit der thermochromen Flüssigkristalle wahrgenommen wird. Bei weiterer Temperaturerhöhung über die Umschlagstemperatur T2 wird die thermochrome Schicht wieder transparent, so dass der schwarze Untergrund wieder sichtbar wird und die schwarze Zahl "15" damit verschwindet.

Bei dem hier nicht gezeigten alternativen Sicherheitselement ist das flüssigkristalline thermochrome Material mit einem flüssigkristallinen Material mit optisch variablem Effekt gemischt. Unabhängig von der Temperatur erkennt der Betrachter bei Änderung des Betrachtungswinkels in Reflexion unterschiedliche Farbeindrücke, die aufgrund des schwarzen Untergrundes besonders brillant erscheinen.

In den unveränderten Bereichen 5 liegen bei dieser Alternative thermochrome und optisch variable Flüssigkristallpigmente vor, während in den Bereichen 6 optisch variable und veränderte thermochrome Flüssigkristallpigmente vorliegen.

Das Sicherheitselement in Fig. 3a erscheint dem Betrachter nicht schwarz, sondern zeigt einen Farbkippeffekt, z.B. von Grün nach Blau.

Oberhalb der Umschlagstemperatur (T1) der thermochromen Schicht wird diese vorzugsweise farbig, insbesondere hell, so dass der Farbkippeffekt in den Bereichen 5 so gut wie nicht mehr wahrnehmbar ist. In den Bereichen 6, in denen der thermochrome Effekt nicht mehr vorhanden ist, scheint der schwarze Untergrund durch und der Farbkippeffekt ist im Bereich der Zahl "15" sichtbar. Dem Betrachter bietet sich somit folgendes Bild. Unterhalb der Umschlagstemperatur (T1) nimmt er mit bloßem Auge nur den Farbkippeffekt des flüssigkristallinen Materials mit optisch variablem Effekt wahr. Durch Zuführen von Körperwärme beim Berühren oder auch Reiben der Oberfläche können zusätzlich - wie in Fig. 3b gezeigt - die nicht thermochromen Informationen 6, hier die Zahl "15" mit Farbkippeffekt, überhalb der Umschlagstemperatur gelesen werden. Mit bloßem Auge kann der Betrachter so bereits drei Sicherheitsmerkmale überprüfen, nämlich den thermochromen Effekt, die Individualisierung und den Farbkippeeffekt. In einer bevorzugten Ausführungsform handelt es sich bei mindestens einem der eingesetzten flüssigkristallinen Materialien um polarisierende Substanzen. Insbesondere bevorzugt weist sowohl das thermochrome Material 5 wie auch das Material mit Farbkippeffekt 6 polarisierende Eigenschaften auf. Das in Fig. 3b verarbeitete thermochrome Material polarisiert überhalb der Umschlagstemperatur (T1), also im flüssigkristallinen Zustand, vorzugsweise Licht rechtscircular, während das Material mit Farbkippeffekt linkscircular polarisiert. Unter Betrachtung mit einem Polarisiationsfilter, der nur rechtscircular polarisiertes Licht durchlässt, können daher oberhalb der Umschlagstemperatur (T1) die Bereiche 5 gesehen werden, während der Bereich des Farbkippmaterials schwarz 6 erscheint.

Alternativ kann ein thermochromes Material verwendet werden, das bei normaler Umgebungstemperatur hell oder farbig ist und erst oberhalb einer bestimmten Aktivierungstemperatur transparent wird. In diesem Fall verschwindet eine zuvor vorhandene Information 6 bei Einwirkung von Wärme.

Fig. 4 zeigt einen Schichtaufbau, der dem in Fig. 2 gezeigten sehr ähnlich ist, nur dass das Sicherheitselement die Farbschicht 7 zusätzlich aufweist. Die Farbschicht weist eine Schichtdicke im Bereich von ca. 7 bis 20 µm auf. Die Farbschicht 7 ist vorzugsweise eine thermochrome Schicht, die bei Umgebungstemperatur eine dunkle Farbe, vorzugsweise Schwarz, aufweist und bei der Umschlagstemperatur transparent oder zumindest transluzent wird. In einer bevorzugten Variante handelt es sich um eine Druckfarbe mit Leucofarbstoff. Diese Schicht wird mittels Siebdrucktechnik oder bevorzugt mittels Stichtiefdrucktechnik aufgedruckt. Als Leucofarbstoffe werden beispielsweise Spirolactone, Spiropyrane oder Fulgide eingesetzt, die zusammen mit einem Lösungsmittel und einem Entwickler mikroverkapselt sind. Als Entwickler eignen sich schwache Säuren, wie Bisphenol A, Alkyl-p-hydroxybenzoat, 1,2,3-Triazol. Als Lösungsmittel können Alkohol, Ester, Ketone oder Ether eingesetzt werden.

Demnach wird das Substrat 3 in einem ersten Schritt mit einem Offsetaufdruck 4 in Form von Mustern und/oder Zeichen versehen. Der Aufdruck kann ein- oder auch mehrfarbig gestaltet werden, vorzugsweise jedoch schwarz.

Darüber befindet sich eine bei Umgebungstemperatur schwarze Druckschicht 7, die einen Leucofarbstoff umfasst. Bevorzugt wurde diese Schicht mittels Stichtiefdrucktechnik verdruckt. Besonders bevorzugt wird die Schicht vollflächig oder als sehr feine Linien verdruckt. Die Druckschicht umfasst als thermochrome Verbindung besonders bevorzugt eine mikroverkapselte Dreikomponenten-Mischung aus einem Leucofarbstoff, einem Lösungsmittel und einer schwachen Säure. Die thermochrome Verbindung weist unterhalb der Umschlagstemperatur (T3) eine schwarze Eigenfarbe auf und wird oberhalb der Umschlagstemperatur (T3) transparent oder zumindest transluzent. Selbstverständlich ist es auch möglich eine Mischung, umfassend Leucofarbstoffe mit verschiedenen Übergangstemperaturen, einzusetzen oder verschiedene Leucofarbstoff umfassende Druckfarben in unterschiedlichen Bereichen aufzubringen. Denkbar ist beispielsweise, die im Stichtiefdruck übliche Farbschnitttechnik einzusetzen.

Über dieser Schicht 7 kommt wiederum eine Druckschicht 5 zu liegen, die eine Mischung aus flüssigkristallinem thermochromen Material und flüssigkristallinem Material mit optisch variablem Effekt umfasst. Wie in Fig. 2 beschrieben, kann diese Schicht auch nur thermochromes Material und kein flüssigkristallines Material mit optisch variablem Effekt umfassen. Im Folgenden wird aber die Mischung beschrieben.

Die Schicht 5 wird vorzugsweise mittels Siebdruck verdruckt.

In der Schicht 5 liegen veränderte Bereiche 6 vor, die mittels UV-Laser nach dem Druckvorgang erzeugt wurden. In den Bereichen 6 wurde das thermochrome Material so verändert, dass es keinen thermochromen Effekt mehr zeigt. Das unveränderte thermochrome Material ist unterhalb einer Umschlagstemperatur (T1) transparent oder zumindest transluzent und darüber farbig, vorzugsweise hell. Bei einer weiteren Umschlagstemperatur (T2) verliert das thermochrome Material wieder seine Farbe und wird transparent oder zumindest transluzent.

Die Umschlagstemperatur (T2) des flüssigkristallinen thermochromen Materials und die Umschlagstemperatur (T3) des Leucofarbstoff umfassenden Materials unterscheiden sich vorzugsweise um ca. 10 °C.

In Fig. 5a, Fig. 5b und Fig. 5c wird das Sicherheitselement 2 aus Fig. 4 in Aufsicht bei verschiedenen Umgebungstemperaturen gezeigt.

In Fig. 5a liegt die Umgebungstemperatur unterhalb der Umschlagstemperatur (T1) des thermochromen Materials sowie der Umschlagstemperatur (T3) des Leucofarbstoff enthaltenden Materials. Aufgrund des flüssigkristallinen Materials mit optisch variablem Effekt und der schwarzen Eigenfarbe des Leucofarbstoff enthaltenden Materials, das als vollflächiger Untergrund dient, erscheint die thermochrome Schicht in den Bereichen 5 und 6 als brillante Schicht mit einem Farbwechselspiel. Die Bereiche 5 und 6 sind optisch nicht voneinander zu unterscheiden. Oberhalb der Umschlagstemperatur (T1) des thermochromen Materials wird die Schicht in den Bereichen 5 farbig, aber nicht in den Bereichen 6, so dass die Information in Form der Zahl "15" mit Farbkippeffekt in einer farbigen Umgebung ohne Farbkipp-Effekt in Erscheinung tritt.

Bei weiterer Erhöhung der Umgebungstemperatur über die Umschlagstemperatur (T2) und (T3) hinaus, werden das thermochrome flüssigkristalline Material und das Leucofarbstoff umfassende Material transparent oder zumindest transluzent, so dass die unterste informationsführende Schicht 4 im Sicherheitselement 2 sichtbar wird. Der Betrachter erkennt, wie in Fig. 5c gezeigt, den fortlaufenden Schriftzug "xyz".

Ebenso ist es möglich, dass die flüssigkristallinen Schichten und/oder wenigstens eine der weiteren Schichten weitere visuell und/ oder maschinell prüfbare Eigenschaften, wie elektrische Leitfähigkeit, Magnetismus, Lumineszenz oder Ähnliches aufweisen. Um dem jeweiligen Aufdruck elektrisch leitfähige Eigenschaften zu verleihen, genügt es beispielsweise, den verwendeten Druckfarben eine ausreichende Menge an Rußpigmenten zuzusetzen.

Da insbesondere der Untergrund eine dunkle, vorzugsweise schwarze Eigenfarbe aufweisen soll, kann dieser auf sehr einfache Weise mit magnetischen Eigenschaften ausgestattet werden, indem statt Farbpigmenten dunkle magnetische Pigmente verwendet werden.

Bei bestimmten Ausführungsformen, z.B. Sicherheitselementen, die im Gebrauch einer starken mechanischen oder chemischen Belastung ausgesetzt sind, bietet es sich an, die flüssigkristallinen Materialien mit einer Schutzschicht abzudecken. Bei der Schutzschicht kann es sich um eine über das Sicherheitselement laminierte Folie oder eine Schutzlackschicht handeln. Die Schutzlackschicht kann dabei vollflächig oder in Teilflächen aufgebracht werden. Beim Lacksystem können z.B. UV-Lacke, Hybridlacke, Öldrucklacke oder Dispersionslacke vom Ein- bzw. Zweikomponententyp eingesetzt werden. Die Schutzlackschicht wird vorzugsweise aufgedruckt, z.B. mittels Flexodruck oder Offsetdruck.

Die thermochrome Schicht kann auch mehrere thermochrome Materialien mit unterschiedlichen Umschlagstemperaturen aufweisen. Ebenso ist es möglich, die thermochrome Schicht aus mehreren Farbschichten zusammenzusetzen, die jeweils unterschiedliche thermochrome Materialien mit unterschiedlichen Umschlagstemperaturen enthalten. In einer besonders attraktiven Ausführungsform zeigt das thermochrome Material bei Temperaturerhöhung Regenbogenfarben, d.h. einen Farbwechsel von farblos über Rot, Gelb, Grün bis Blau.

Ebenso können verschiedene flüssigkristalline Materialien mit verschiedenen Farbkippeffekten kombiniert werden.

## Patentansprüche

1. Sicherheitselement zur Absicherung von Wertgegenständen, wobei das Sicherheitselement mindestens ein flüssigkristallines thermochromes Material umfasst, das seine Eigenfarbe unter Temperatureinfluss bei einer bestimmten Umschlagstemperatur reversibel ändert,
**dadurch gekennzeichnet, dass**
- das flüssigkristalline thermochrome Material bereichsweise so verändert ist, dass es in diesem Bereich keine thermochromen Eigenschaften zeigt oder eine veränderte Umschlagstemperatur aufweist, und
- dass der veränderte und der unveränderte Bereich unterhalb der Umschlagstemperatur des flüssigkristallinen thermochromen Materials für einen Betrachter nicht unterscheidbar sind.

2. Sicherheitselement zur Absicherung von Wertgegenständen, wobei das Sicherheitselement eine Mischung aufweist, die mindestens ein flüssigkristallines thermochromes Material, das seine Eigenfarbe unter Temperatureinfluss bei einer bestimmten Umschlagstemperatur reversibel ändert, und mindestens ein Material mit optisch variablem Effekt, umfasst,
**dadurch gekennzeichnet, dass**
- das flüssigkristalline thermochrome Material bereichsweise so verändert ist, dass es in diesem Bereich keine thermochromen Eigenschaften zeigt oder eine veränderte Umschlagstemperatur aufweist, und
- dass der veränderte und der unveränderte Bereich unterhalb der Umschlagstemperatur des flüssigkristallinen thermochromen Materials für einen Betrachter nicht unterscheidbar sind.

3. Sicherheitselement nach Anspruch 1 oder 2, **dadurch gekennzeichnet, dass** das flüssigkristalline thermochrome Material in dem veränderten Bereich keinen Farbumschlag bei Temperaturänderung aufweist.

4. Sicherheitselement nach Anspruch 1 bis 3, **dadurch gekennzeichnet, dass** das thermochrome Material verkapselte Flüssigkristalle umfasst.

5. Sicherheitselement nach Anspruch 2 bis 4, **dadurch gekennzeichnet, dass** das Material mit optisch variablem Effekt flüssigkristallin ist oder Dünnschichtpigmente umfasst.

6. Sicherheitselement nach wenigstens einem der Ansprüche 1 bis 5, dadurch gekenntzeichnet, dass das flüssigkristalline thermochrome Material bzw. die Mischung verdruckt ist.

7. Sicherheitselement nach wenigstens einem der Ansprüche 1 bis 6, **dadurch gekennzeichnet, dass** die bereichsweise Veränderung in Form von Zeichen und/ oder Mustern erfolgt ist.

8. Sicherheitselement nach wenigstens einem der Ansprüche 2 bis 7, **dadurch gekennzeichnet, dass** das flüssigkristalline thermochrome Material und das Material mit optisch variablem Effekt Licht unterschiedlich polarisieren.

9. Sicherheitselement nach wenigstens einem der Ansprüche 2 bis 8, **dadurch gekennzeichnet, dass** es sich bei dem optisch variablen Effekt um einen Farbkippeffekt handelt.

10. Sicherheitselement nach wenigstens einem der Ansprüche 1 bis 9, **dadurch gekennzeichnet, dass** unter dem flüssigkristallinen thermochromen Material bzw. der Mischung ein zumindest teilweise dunkler, vorzugsweise schwarzer Untergrund vorliegt.

11. Sicherheitselement nach Anspruch 10, **dadurch gekennzeichnet, dass** der Untergrund vollflächig dunkel ist.

12. Sicherheitselement nach Anspruch 10, **dadurch gekennzeichnet, dass** der Untergrund in Form von Mustern und/ oder Zeichen vorliegt.

13. Sicherheitselement nach wenigstens einem der Ansprüche 10 bis 12, **dadurch gekennzeichnet, dass** der Untergrund gedruckt, durch Einfärben eines Substrates oder mittels Laser erzeugt ist.

14. Sicherheitselement nach wenigstens einem der Ansprüche 1 bis 13, **dadurch gekennzeichnet, dass** das thermochrome flüssigkristalline Material und/ oder das Material mit optisch variablen Effekten, der Untergrund und/ oder eine weitere Schicht maschinell und/ oder visuell prüfbare Eigenschaften aufweist.

15. Sicherheitselement nach wenigstens einem der Ansprüche 1 bis 14, **dadurch gekennzeichnet, dass** das flüssigkristalline thermochrome Material unterhalb der Umschlagstemperatur farbig und oberhalb dieser Temperatur transparent oder zumindest transluzent ist.

16. Sicherheitselement nach wenigstens einem der Ansprüche 1 bis 15, **dadurch gekennzeichnet, dass** das thermochrome flüssigkristalline Material unterhalb der Umschlagstemperatur zumindest transluzent oder transparent und oberhalb dieser Temperatur farbig ist.

17. Sicherheitselement nach Anspruch 15 oder 16, **dadurch gekennzeichnet, dass** die Umschlagstemperatur im Bereich von 20 bis 60 °C liegt.

18. Sicherheitselement nach wenigstens einem der Ansprüche 1 bis 17, **dadurch gekennzeichnet, dass** unterhalb des flüssigkristallinen thermochromen Materials bzw. der Mischung eine Schicht vorliegt, die mindestens einen thermochromen Leucofarbstoff umfasst.

19. Sicherheitselement nach Anspruch 18, **dadurch gekennzeichnet, dass** die Schicht im Stichtiefdruck verdruckt ist.

20. Sicherheitselement nach wenigstens einem der Ansprüche 1 bis 19, **dadurch gekennzeichnet, dass** das Sicherheitselement vollständig aufgedruckt ist.

21. Sicherheitselement nach wenigstens einem der Ansprüche 1 bis 19, **dadurch gekennzeichnet, dass** das Sicherheitselement ein Etikett ist.

22. Sicherheitselement nach wenigstens einem der Ansprüche 1 bis 19, **dadurch gekennzeichnet, dass** das Sicherheitselement ein Sicherheitsfaden ist.

23. Wertgegenstand mit einem Sicherheitselement gemäß wenigstens einem der Ansprüche 1 bis 22.

24. Wertgegenstand nach Anspruch 23, **dadurch gekennzeichnet, dass** der Wertgegenstand ein Sicherheitspapier, ein Sicherheitsdokument oder eine Produktverpackung ist.

25. Transfermaterial zur Herstellung eines Sicherheitselements, **dadurch gekennzeichnet, dass** das Transfermaterial ein Trägermaterial aufweist, auf welchem mindestens ein Sicherheitselement gemäß wenigstens einem der Ansprüche 1 bis 22 aufgebracht ist.

26. Verfahren zur Herstellung eines Wertgegenstandes oder Sicherheitselementes, **dadurch gekennzeichnet, dass**
- ein Substrat zur Verfügung gestellt wird,
- auf dieses Substrat mindestens ein flüssigkristallines thermochromes Material aufgebracht wird, das seine Eigenfarbe unter Temperatureinfluss bei einer bestimmten Umschlagstemperatur reversibel ändert,
- das flüssigkristalline thermochrome Material bereichsweise so verändert wird, dass
-- es in diesem Bereich eine veränderte Umschlagstemperatur aufweist oder keine thermochromen Eigenschaften zeigt und
-- der veränderte und der unveränderte Bereich unterhalb der Umschlagstemperatur des flüssigkristallinen thermochromen Materials für einen Betrachter nicht unterscheidbar sind.

27. Verfahren nach Anspruch 26, **dadurch gekennzeichnet, dass** das thermochrome Material vor dem Aufbringen mit mindestens einem Material mit optisch variablem Effekt, insbesondere einem flüssigkristallinen Material mit optisch variablem Effekt, gemischt wird.

28. Verfahren nach Anspruch 26 oder 27, **dadurch gekennzeichnet, dass** das flüssigkristalline thermochrome Material bzw. die Mischung aufgedruckt wird.

29. Verfahren nach wenigstens einem der Ansprüche 26 bis 28, **dadurch gekennzeichnet, dass** das flüssigkristalline thermochrome Material mittels UV- Bestrahlung, mittels Einwirken von Lösungsmittel oder Applikation von Druck verändert wird.

30. Verfahren nach Anspruch 29, **dadurch gekennzeichnet, dass** die UV-Bestrahlung mittels Laser erfolgt

31. Verfahren nach Anspruch 26 bis 30, **dadurch gekennzeichnet, dass** die Bereiche, in denen keine Veränderung des flüssigkristallinen thermochromen Materials erfolgen soll, mittels einer Maske abgedeckt werden.

32. Verfahren nach Anspruch 29, **dadurch gekennzeichnet, dass** das Lösungsmittel bereichsweise aufgedruckt wird.

## Claims

1. A security element for securing valuable articles, the security element comprising at least one liquid crystal thermochromic material that, under the influence of temperature, reversibly changes its intrinsic color at a certain color-change temperature,
**characterized in that**
- the liquid crystal thermochromic material is changed in some regions in such a way that, in said regions, it displays no thermochromic properties or exhibits a changed color-change temperature, and
- **in that**, below the color-change temperature of the liquid crystal thermochromic material, the changed and the unchanged region are not distinguishable for a viewer.

2. A security element for securing valuable articles, the security element exhibiting a mixture that comprises at least one liquid crystal thermochromic material that, under the influence of temperature, reversibly changes its intrinsic color at a certain color-change temperature, and at least one material having an optically variable effect,
**characterized in that**
- the liquid crystal thermochromic material is changed in some regions in such a way that, in said regions, it displays no thermochromic properties or exhibits a changed color-change temperature, and
- **in that**, below the color-change temperature of the liquid crystal thermochromic material, the changed and the unchanged region are not distinguishable for a viewer.

3. The security element according to claim 1 or 2, **characterized in that**, in the changed region, the liquid crystal thermochromic material exhibits no color change when the temperature changes.

4. The security element according to claim 1 to 3, **characterized in that** the thermochromic material comprises encapsulated liquid crystals.

5. The security element according to claim 2 to 4, **characterized in that** the material having an optically variable effect is liquid crystalline or comprises thin-film pigments.

6. The security element according to at least one of claims 1 to 5, **characterized in that** the liquid crystal thermochromic material or the mixture is printed.

7. The security element according to at least one of claims 1 to 6, **characterized in that** the change in some regions occurred in the form of characters and/or patterns.

8. The security element according to at least one of claims 2 to 7, **characterized in that** the liquid crystal thermochromic material and the material having an optically variable effect polarize light differently.

9. The security element according to at least one of claims 2 to 8, **characterized in that** the optically variable effect is a color shift effect.

10. The security element according to at least one of claims 1 to 9, **characterized in that** an at least partially dark, preferably black background is present under the liquid crystal thermochromic material or the mixture.

11. The security element according to claim 10, **characterized in that** the background is contiguously dark.

12. The security element according to claim 10, **characterized in that** the background is present in the form of patterns and/ or characters.

13. The security element according to at least one of claims 10 to 12, **characterized in that** the background is printed or produced by coloring a substrate or by means of laser.

14. The security element according to at least one of claims 1 to 13, **characterized in that** the thermochromic liquid crystal material and/ or the material having optically variable effects, the background and/ or a further layer exhibits machine and/ or visually verifiable properties.

15. The security element according to at least one of claims 1 to 14, **characterized in that** the liquid crystal thermochromic material is colored below the color-change temperature and transparent or at least translucent above said temperature.

16. The security element according to at least one of claims 1 to 15, **characterized in that** the thermochromic liquid crystal material is at least translucent or transparent below the color-change temperature and colored above said temperature.

17. The security element according to claim 15 or 16, **characterized in that** the color-change temperature lies in the range from 20 to 60°C.

18. The security element according to at least one of claims 1 to 17, **characterized in that**, below the liquid crystal thermochromic material or the mixture, a layer is present that comprises at least one thermochromic leuco dye.

19. The security element according to claim 18, **characterized in that** the layer is printed in intaglio printing.

20. The security element according to at least one of claims 1 to 19, **characterized in that** the security element is completely imprinted.

21. The security element according to at least one of claims 1 to 19, **characterized in that** the security element is a label.

22. The security element according to at least one of claims 1 to 19, **characterized in that** the security element is a security thread.

23. A valuable article having a security element according to at least one of claims 1 to 22.

24. The valuable article according to claim 23, **characterized in that** the valuable article is a security paper, a security document or a product packaging.

25. A transfer material for manufacturing a security element, **characterized in that** the transfer material exhibits a substrate material on which at least one security element according to at least one of claims 1 to 22 is applied.

26. A method for manufacturing a valuable article or a security element, **characterized in that**
- a substrate is provided,
- to said substrate is applied at least one liquid crystal thermochromic material that, under the influence of temperature, reversibly changes its intrinsic color at a certain color-change temperature,
- in some regions, the liquid crystal thermochromic material is changed in such a way that
-- in said regions, it exhibits a changed color-change temperature or displays no thermochromic properties, and
-- below the color-change temperature of the liquid crystal thermochromic material, the changed and the unchanged region are not distinguishable for a viewer.

27. The method according to claim 26, **characterized in that**, before application, the thermochromic material is mixed with at least one material having an optically variable effect, particularly a liquid crystal material having an optically variable effect.

28. The method according to claim 26 or 27, **characterized in that** the liquid crystal thermochromic material or the mixture is imprinted.

29. The method according to at least one of claims 26 to 28, **characterized in that** the liquid crystal thermochromic material is changed by means of UV irradiation, by means of the action of a solvent or the application of pressure.

30. The method according to claim 29, **characterized in that** the UV irradiation occurs by means of laser.

31. The method according to claim 26 to 30, **characterized in that** the regions in which no change is to occur in the liquid crystal thermochromic material are covered by means of a mask.

32. The method according to claim 29, **characterized in that** the solvent is imprinted in some regions.

## Revendications

1. Elément de sécurité pour la protection d'objets de valeur, l'élément de sécurité comprenant au moins un matériau thermochrome cristal liquide, qui modifie d'une manière réversible sa couleur propre sous l'influence de la température, à une certaine température d'activation, **caractérisé en ce que**
- le matériau thermochrome cristal liquide subit par zones une modification telle que, dans cette zone, il ne présente aucune propriété thermochrome, ou présente une température d'activation modifiée, et
- la zone modifiée et la zone non modifiée ne peuvent, pour un observateur, être distinguées en-dessous de la température d'activation du matériau thermochrome cristal liquide.

2. Elément de sécurité pour la protection d'objets de valeur, l'élément de sécurité comportant un mélange qui comprend au moins un matériau thermochrome cristal liquide, qui modifie d'une manière réversible sa couleur propre sous l'influence de la température à une certaine température d'activation, et comprend au moins un matériau présentant un effet optiquement variable, **caractérisé en ce que**
- le matériau thermochrome cristal liquide subit par zones une modification telle que, dans cette zone, il ne présente aucune propriété thermochrome, ou présente une température d'activation modifiée, et
- la zone modifiée et la zone non modifiée ne peuvent, pour un observateur, être distinguées en-dessous de la température d'activation du matériau thermochrome cristal liquide.

3. Elément de sécurité selon la revendication 1 ou 2, **caractérisé en ce que** le matériau thermochrome cristal liquide ne présente, dans la zone modifiée, aucun changement de couleur lors d'un changement de température.

4. Elément de sécurité selon les revendications 1 à 3, **caractérisé en ce que** le matériau thermochrome comprend des cristaux liquides encapsulés.

5. Elément de sécurité selon les revendications 2 à 4, **caractérisé en ce que** le matériau présentant un effet optiquement variable est un matériau cristal liquide, ou comprend des pigments à couche mince.

6. Elément de sécurité selon au moins l'une des revendications 1 à 5, **caractérisé en ce que** le matériau thermochrome cristal liquide ou le mélange est imprimé.

7. Elément de sécurité selon au moins l'une des revendications 1 à 6, **caractérisé en ce que** la modification par zones a lieu sous forme de caractères et/ou de motifs.

8. Elément de sécurité selon au moins l'une des revendications 2 à 7, **caractérisé en ce que** le matériau thermochrome cristal liquide et le matériau présentant un effet optiquement variable polarisent différemment la lumière.

9. Elément de sécurité selon au moins l'une des revendications 2 à 8, **caractérisé en ce que**, pour ce qui concerne l'effet optiquement variable, il s'agit d'un effet de changement de couleur en fonction de l'angle d'observation.

10. Elément de sécurité selon au moins l'une des revendications 1 à 9, **caractérisé en ce qu'**un fond au moins partiellement foncé, de préférence noir, est présent en-dessous du matériau thermochrome cristal liquide ou du mélange.

11. Elément de sécurité selon la revendication 10, **caractérisé en ce que** la totalité de la surface du fond est foncée.

12. Elément de sécurité selon la revendication 10, **caractérisé en ce que** le fond se présente sous forme de motifs et/ou de caractères.

13. Elément de sécurité selon au moins l'une des revendications 10 à 12, **caractérisé en ce que** le fond est imprimé, produit par coloration d'un substrat ou par laser.

14. Elément de sécurité selon au moins l'une des revendications 1 à 13, **caractérisé en ce que** le matériau cristal liquide thermochrome et/ou le matériau présentant des effets optiquement variables, le fond et/ou une couche supplémentaire, présentent des propriétés pouvant être vérifiées par un moyen mécanique et/ou visuellement.

15. Elément de sécurité selon au moins l'une des revendications 1 à 14, **caractérisé en ce que** le matériau thermochrome cristal liquide est coloré en-dessous de la température d'activation et est transparent ou au moins translucide au-delà de cette température.

16. Elément de sécurité selon au moins l'une des revendications 1 à 15, **caractérisé en ce que** le matériau cristal liquide thermochrome est au moins translucide ou transparent en-dessous de la température d'activation et est coloré au-delà de cette température.

17. Elément de sécurité selon la revendication 15 ou 16, **caractérisé en ce que** la température d'activation est comprise dans la plage de 20 à 60°C.

18. Elément de sécurité selon au moins l'une des revendications 1 à 17, **caractérisé en ce qu'**une couche qui comprend au moins un colorant leuco-dérivé thermochrome est présente en-dessous du matériau thermochrome cristal liquide ou du mélange.

19. Elément de sécurité selon la revendication 18, **caractérisé en ce que** la couche est imprimée en taille douce.

20. Elément de sécurité selon au moins l'une des revendications 1 à 19, **caractérisé en ce que** l'élément de sécurité est entièrement surimprimé.

21. Elément de sécurité selon au moins l'une des revendications 1 à 19, **caractérisé en ce que** l'élément de sécurité est une étiquette.

22. Elément de sécurité selon au moins l'une des revendications 1 à 19, **caractérisé en ce que** l'élément de sécurité est un fil de sécurité.

23. Objet de valeur comportant un élément de sécurité selon au moins l'une des revendications 1 à 22.

24. Objet de valeur selon la revendication 23, **caractérisé en ce que** l'objet de valeur est un papier de sécurité, un document de valeur ou un emballage pour un produit.

25. Matériau de transfert pour fabriquer un élément de sécurité, **caractérisé en ce que** le matériau de transfert comprend un matériau support, sur lequel au moins un élément de sécurité selon au moins l'une des revendications 1 à 22 est appliqué.

26. Procédé de fabrication d'un objet de valeur ou d'un élément de sécurité, **caractérisé en ce que**
- un substrat est mis à disposition,
- sur ce substrat, on applique au moins un matériau thermochrome cristal liquide, qui modifie d'une manière réversible sa couleur propre sous l'influence de la température à une certaine température d'activation,
- on modifie par zones le matériau thermochrome cristal liquide, de telle sorte que
- il présente dans cette zone une température d'activation modifiée, ou ne présente aucune propriété thermochrome, et
- la zone modifiée et la zone non modifiée ne puissent être distinguées par un observateur en-dessous de la température d'activation du matériau thermochrome cristal liquide.

27. Procédé selon la revendication 26, **caractérisé en ce que** le matériau thermochrome est, avant application, mélangé à au moins un matériau présentant un effet optiquement variable, en particulier un matériau cristal liquide présentant un effet optiquement variable.

28. Procédé selon la revendication 26 ou 27, **caractérisé en ce que** le matériau thermochrome cristal liquide ou le mélange est surimprimé.

29. Procédé selon au moins l'une des revendications 26 à 28, **caractérisé en ce que** le matériau thermochrome cristal liquide subit une modification sous l'effet d'un rayonnement UV, sous l'action d'un solvant, ou après application d'une pression.

30. Procédé selon la revendication 29, **caractérisé en ce que** le rayonnement UV est obtenu par un laser.

31. Procédé selon les revendications 26 à 30, **caractérisé en ce que** les zones dans lesquelles il ne doit y avoir aucune modification du matériau thermochrome cristal liquide deviennent recouvertes d'un masque.

32. Procédé selon la revendication 29, **caractérisé en ce que** le solvant est surimprimé par zones.
